(19) Europäisches Patentamt
European Patent Office
Office européen des brevets

(11) **EP 3 578 516 A2**

(12) **EUROPEAN PATENT APPLICATION**

(43) Date of publication:
**11.12.2019 Bulletin 2019/50**

(51) Int Cl.:
***C01G 51/00*** *(2006.01)*

(21) Application number: **19175157.7**

(22) Date of filing: **17.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.05.2018 CN 201810478460**

(71) Applicant: **Ningde Amperex Technology Limited**
**Zhangwan Town, Jiaocheng Zone**
**Ningde City**
**Fujian 352100 (CN)**

(72) Inventors:
- **LANG, Ye**
  **Ningde City, Fujian Province 352100 (CN)**
- **PENG, Gang**
  **Ningde City, Fujian Province 352100 (CN)**
- **XU, Leimin**
  **Ningde City, Fujian Province 352100 (CN)**
- **CHENG, Yousong**
  **Ningde City, Fujian Province 352100 (CN)**

(74) Representative: **Klunker IP**
**Patentanwälte PartG mbB**
**Destouchesstraße 68**
**80796 München (DE)**

(54) **CATHODE MATERIAL AND LITHIUM ION BATTERY**

(57)    The present application relates to a cathode material and a lithium ion battery. Particularly, the cathode material includes a matrix and a coating layer, wherein the matrix includes lithium cobalt oxide bulk-doped with metal element M, and the coating layer has a spinel phase structure doped with metal element Me. The spinel phase structure can form three-dimensional lithium ion channels, thereby increasing a diffusion path of lithium ions, and introducing more electrochemical reaction active sites. Therefore, when the lithium ion battery with the cathode material is discharged at a current of about 6 C at about -10°C, a capacity retention rate is up to about 99% or above as compared with that when the current is about 0.5 C. At the same time, the lithium ion battery also has high temperature stability, and has excellent cycle performance in high-temperature heavy-current charge-discharge environments.

EP 3 578 516 A2

**Description**

**CROSS REFERENCE TO RELATED APPLICATIONS**

The present application claims the benefit of priority from the China Patent Application No. 201810478460.3, filed on 18 May 2018, the disclosure of which is hereby incorporated by reference in its entirety.

**BACKGROUND**

**I. Technical Field**

The present application relates to the technical field of energy storage, and more particularly to a cathode material and a lithium ion battery.

**II. Description of the Related Art**

Lithium ion batteries have become the main solution for mobile energy because of their outstanding advantages of high energy density, low self-discharge, no memory effect, etc. They have been widely used in the fields of mobile phones, tablets, electric vehicles, drones, etc. With the promotion of lithium ion batteries in application fields, it not only requires lithium ion batteries to have excellent performance at normal temperature, but also puts forward new requirements for their performance in high temperature and low temperature environments. For example, as drones for aerial photography are getting hotter, the lithium ion battery is required to be rapidly charged and discharged in a relatively extreme temperature environment and to have a long service life.

**SUMMARY**

Lithium cobalt oxide ($LiCoO_2$) is a common cathode material for lithium ion batteries. However, the lithium ion battery using the existing lithium cobalt oxide material performs poorly in low-temperature high-rate charging and discharging processes, and it is difficult to meet people's demands on lithium ion batteries. For example, a lithium ion battery prepared by the existing lithium cobalt oxide material has a severe deterioration in capacity retention rate in the low-temperature high-rate charging and discharging processes (for example discharge current is about 6C or above); this is because in a low-temperature rapid charging and discharging environment, the interface activity of the cathode material is not high, and lithium ions participating in reaction are difficult to rapidly intercalate and deintercalate at an interface, resulting in a sharp increase in transient polarization and a significant and rapid voltage drop to a voltage lower limit.

In addition, it is difficult to obtain a lithium ion battery capable of exhibiting excellent performance in both low temperature and high temperature environments in the art. In the prior art, some lithium ion batteries exhibit excellent performance in a low-temperature charging and discharging environment, but performance deteriorates severely in the high-temperature charging and discharging processes; and some are on the contrary. Therefore, it is highly desirable to obtain a lithium ion battery that takes into consideration both low temperature and high temperature performance.

In order to make up for the shortcomings and defects of the prior art, the present application has carried out research on the cathode material of lithium ion batteries, and has focused on improving the structure and composition of lithium cobalt oxide, aiming to obtain a cathode material having excellent rate performance in a low-temperature discharge environment and also having a good electrochemical performance in a high-temperature discharge environment.

In one aspect, an embodiment of the present application provides a cathode material, which includes a matrix, wherein the matrix includes lithium cobalt oxide bulk-doped with metal element M; and a coating layer, arranged on a surface of the matrix; wherein M includes at least one of Mg, Ti, Zr or Al, wherein the coating layer has a spinel phase structure doped with metal element Me, and Me includes at least one of Ni, Mn, Al, Mg, Ti, Zr, Y, Mo, W, Na, Cu, Cr, Zn or Fe, and wherein the coating layer includes Me, O, Li and Co. Compared with the conventional lithium cobalt oxide cathode material having a layered two-dimensional channel, the surface of the cathode material provided by the embodiments of the present application can form a metal-doped spinel phase structure. Firstly, the spinel phase structure has a three-dimensional deintercalated lithium channel, thereby significantly increasing a diffusion path of lithium ions, and improves the rate performance of the lithium cobalt oxide material. Secondly, the spinel phase structure can provide more active sites for electrochemical reactions, thereby effectively increasing the active specific surface area capable of performing lithium ion deintercalation reaction. The active specific surface area of the cathode material of the embodiments of the present application that can perform a lithium ion deintercalation reaction is greater than or equal to about $3.6 cm^2/g$.

In an embodiment of the present application, Me at least includes two metal elements.

In an embodiment of the present application, M and Me are not completely identical.

In an embodiment of the present application, the mole percent of any element of Me is about 0.1%-2% relative to that of Co.

In an embodiment of the present application, the mole percent of each of M is about 0.1%-1% relative to that of Co.

In an embodiment of the present application, the cathode material has a median particle diameter $D_{50}$ of about 3-11$\mu$m.

Another embodiment of the present application provides a lithium ion battery using the above cathode material.

Another embodiment of the present application further provides a method for preparing a cathode material, which includes: providing a precursor of lithium cobalt oxide; mixing the precursor with a compound of lithium and a compound of metal element M, and sintering in an air atmosphere at about 900-1000°C for about 6-12 hours to form lithium cobalt oxide bulk-doped with metal element M; and mixing the lithium cobalt oxide with a compound of metal element Me, sintering the mixture in an air atmosphere at about 850-950°C for about 6-12 hours, naturally cooling the mixture, and then annealing the mixture in an oxygen-containing atmosphere to obtain a lithium cobalt oxide cathode material surface-doped with metal element Me and having a spinel phase structure on the surface, wherein the annealing temperature is about 600-900°C, and the annealing time is about 1-8 hours, wherein M includes at least one of Mg, Ti, Zr or Al, and wherein Me includes at least one of Ni, Mn, Al, Mg, Ti, Zr, Y, Mo, W, Na, Cu, Cr, Zn or Fe.

In an embodiment of the present application, the volume percent of oxygen in the oxygen-containing atmosphere is less than about 10%. In an embodiment of the present application, the annealing temperature is about 700-860°C. In an embodiment of the present application, the annealing time is about 2-6 hours. In an embodiment of the present application, the precursor of lithium cobalt oxide can be formed by reacting a cobalt source, a lithium source and a precipitant in an aqueous solution.

Another embodiment of the present application further provides a method for preparing a cathode material, which differs from the previous method in that metal element M is doped in the precursor of lithium cobalt oxide in the process of synthesizing the bulk-doped lithium cobalt oxide. Specifically, the method includes: mixing a cobalt source, a lithium source, a precipitant and a salt solution of metal element M to form a precursor of lithium cobalt oxide bulk-doped with metal element M; sintering the precursor in an air atmosphere at about 900-1000°C for about 6-12 hours to form lithium cobalt oxide bulk-doped with metal element M; and mixing the lithium cobalt oxide with a compound of metal element Me, sintering the mixture in an air atmosphere at about 850-950°C for about 6-12 hours, naturally cooling the mixture, and then annealing the mixture in an oxygen-containing atmosphere to obtain a lithium cobalt oxide cathode material surface-doped with metal element Me and having a spinel phase structure on the surface, wherein the annealing temperature is about 600-900°C, and the annealing time is about 1-8 hours, wherein M includes at least one of Mg, Ti, Zr or Al, and wherein Me includes at least one of Ni, Mn, Al, Mg, Ti, Zr, Y, Mo, W, Na, Cu, Cr, Zn or Fe.

In an embodiment of the present application, M is at least one element selected from the group consisting of the following metal elements: Mg, Ti, Zr and Al.

In an embodiment of the present application, Me is at least one element selected from the group consisting of the following metal elements: Ni, Mn, Al, Mg, Ti, Zr, Y, Mo, W, Na, Cu, Cr, Zn and Fe.

The cathode material disclosed in the embodiments of the present application has excellent rate performance in a low-temperature discharge environment and also has a good electrochemical performance in a high-temperature discharge environment.

## BRIEF DESCRIPTION OF THE DRAWINGS

FIG. 1A and FIG. 1B are SEM images of a cathode material B1.

FIG. 2A is a TEM image of the cathode material B1.

FIG. 2B is an electron diffraction diagram of the cathode material B1.

FIG. 3 shows discharge curves of the cathode material B1 at different currents.

FIG. 4 shows discharge curves of the cathode materials B1 and A1-A4 at about -10°C at about 8C.

## DETAILED DESCRIPTION

In order to make the objects, technical solutions, and advantages of the present application more clear, the technical solutions of the present application will be clearly and completely described below in the following with reference to the embodiments of the present application. It is apparent that the described embodiments are a part of the embodiments of the present application, rather than all of the embodiments. All other embodiments obtained by those skilled in the art, based on the technical solutions provided by the present application, and without creative effort are all within the scope of the present application.

**1. Test method**

The present application firstly describes a test method of the cathode material and a preparation method and a test process of the lithium ion battery as follows.

(1) Active specific surface area test of cathode materials

The basic principle is to introduce a suitable electrochemical redox couple as a probe molecule into an electrolytic solution to achieve measurement of the active specific surface area of a porous electrode. When a potential is applied to the electrode, electrons are transferred to the surface of the active reaction site of an active material through a current collector, and a redox reaction occurs. The area of the active site is the active specific surface area, that is, the specific surface area of the whole electrode material capable of actually participating in the electrochemical reaction excluding defects, inert crystal surfaces and the like. Therefore, the specific surface area of the cathode material capable of actually participating in the electrochemical reaction may be obtained by this test.

In the present application, about 50 mMol/L ferrocene is used as a probe molecule, and a potential of about 3.0-3.5 V is applied to an electrode coated with a cathode active substance. The specific preparation method of the electrode is as follows: a cathode material, a conductive agent acetylene black and an adhesive polyvinylidene fluoride (PVDF) were sufficiently stirred and uniformly mixed in a mass ratio of about 90:5:5 in an N-methylpyrrolidone solvent system, coated on a cathode current collector Al foil, dried, and pressed to obtain a cathode electrode.

The active specific surface area is calculated by using a Randles-Sevick equation:

$$i_p = 2.69 \times 10^5 n^{3/2} A D^{1/2} U^{1/2} C$$

where $i_p$ is peak current (A), n is the electron transfer number of the electrode reaction, A is the active surface area ($cm^2$) of the electrode, C is the reactant concentration ($mol/cm^3$), D is a lithium ion diffusion coefficient ($cm^2/s$), and U is scanning speed (V/s).

(2) Preparation method and test process of lithium ion battery

2.1 Preparation method of lithium ion battery

A cathode material, a conductive agent acetylene black and an adhesive polyvinylidene fluoride (PVDF) were sufficiently stirred and uniformly mixed in a mass ratio of about 94:3:3 in an N-methylpyrrolidone solvent system, coated on a cathode current collector Al foil, dried, and pressed to obtain a cathode electrode.

An anode material artificial graphite-hard carbon mixture, a conductive agent acetylene black, an adhesive styrene-butadiene rubber (SBR) and a thickener sodium carboxymethyl cellulose (CMC) were sufficiently stirred and uniformly mixed in a mass ratio of about 95:2:2:1 in a deionized water solvent system, coated on an anode current collector Cu foil, dried and pressed to obtain an anode electrode.

A PE porous polymer film was used as a separator. An electrolyte was a 1M $LiPF_6$ solution, and an organic solvent was a mixture of ethylene carbonate and dimethyl carbonate (in a volume ratio of about 1:1).

The cathode electrode, the separator and the anode electrode were stacked sequentially so that the separator was positioned between the cathode and the anode to perform a function of separation, and a bare cell was obtained by winding. The bare cell was put in a polymer pouch package and vacuum-dried to remove excess moisture and organic media, the prepared base electrolytic solution was injected, and the pre-packaging was performed. Formation, evacuation, pre-circulation, shaping and other processes were performed to prepare a pouch lithium ion battery with a cell capacity of about 2Ah.

2.2 Test method of lithium ion battery

(1) Capacity test of lithium ion battery

At about 25°C, the lithium ion battery was charged at a constant current of about 0.5 C to a cut-off voltage of about 4.4 V, and then charged at a constant voltage of about 4.4 V to a current of about 0.05 C to obtain a first charge capacity; and the battery was discharged at a constant current of about 0.5 C to about 3.0 V to obtain a first discharge capacity which was used as rated capacity Cn (i.e., 100% SOC) of the lithium ion battery, wherein discharge specific capacity was equal to the first discharge capacity/mass of modified cathode material.

(2) Discharge rate test of lithium ion battery

At about 25°C, the lithium ion battery was charged at a current of about 1 C to a cut-off voltage of about 4.4 V, charged at a constant voltage of about 4.4 V to a current of about 0.05 C, and discharged respectively at constant currents of about 0.5 C and about 15 C to about 3.0 V to respectively obtain discharge capacities at the currents of about 0.5 C and about 15 C. The percentage X was used to measure the rate performance of the lithium ion battery at normal temperature, wherein X=(discharge capacity at about 15 C)/(discharge capacity at about 0.5 C) * 100%.

(3) Low-temperature rate test of lithium ion battery

At about 25°C, the lithium ion battery was charged at a current of about 1 C to a cut-off voltage of about 4.4 V, and was charged at a constant voltage of about 4.4 V to a current of about 0.05 C. Then, the lithium ion battery was put into an about -10°C low temperature chamber to stand for about 2 hours, and discharged respectively at constant currents of about 0.5 C, about 6 C and about 8C to about 3.0 V to respectively obtain discharge capacities at the currents of about 0.5 C, about 6 C and about 8 C. The percentage Y was used to measure the rate performance of the lithium ion battery at low temperature, wherein Y=(discharge capacity at about 6 C)/(discharge capacity at about 0.5 C) * 100%. In addition, the valley voltage at which the lithium ion battery was discharged at a current of about 8 C was recorded.

(4) High-temperature performance test of lithium ion battery

At about 25°C, the lithium ion battery was charged at a current of about 0.5 C to a cut-off voltage of about 4.4 V, and was charged at a constant voltage of about 4.4 V to a current of about 0.05 C. Then, the lithium ion battery was put into an about 60°C high temperature chamber to stand for about 30 days, the thickness being tested every 3 days and the thickness expansion ratio being calculated, wherein the thickness expansion ratio on the $n_{th}$ day=(cell thickness on $n_{th}$ day - initial thickness)/initial thickness * 100%.

At about 45°C, the lithium ion battery was subjected to a charge-discharge cycle test at a charge current of about 1.5 C and a discharge current of about 5 C, the voltage range being set to about 3.0 V to about 4.4 V. The first cycle capacity D1 of the lithium ion battery and the capacity $D_{500}$ after about 500 cycles were recorded respectively, and the capacity retention rate Z of the lithium ion battery after about 500 cycles was calculated, wherein Z=$D_{500}$/$D_1$ * 100%.

Test data appearing in the following embodiments were measured using the above test methods.

## 2. Embodiments

Specific embodiments provided by the present application will be described in detail below.

(1) Embodiment 1 and Comparative Embodiments 1-4

In the present application, a cathode material B1 (Embodiment 1) was synthesized by the following preparation method, wherein the cathode material B1 may be simply described as: bulk-doped with Al and Mg and surface-doped with Al and Ti (the mole ratios of the surface doping elements Al and Ti to Co were respectively about 0.25% and about 0.25%), and the median particle diameter $D_{50}$ of B1 was about 6 $\mu$m.

Note that "mole ratio" refers to the ratio of the mole number of Al and Ti atoms participating in the reaction to the mole number of Co atoms participating in the reaction. For example, "the mole ratios of Al and Ti to Co are respectively about 0.25% and about 0.25%" means that about 0.125% mol of $Al_2O_3$ and about 0.25%mol of $TiO_2$ react with about 1 mol of $LiCoO_2$.

The cathode material B1 may be obtained by the following steps:

Synthesis of bulk-doped lithium cobalt oxide: about 286.7g of $Co(NO_3)_2 \cdot 6H_2O$ was weighed and dissolved in about 1L of deionized water, and stirred sufficiently at normal temperature to obtain a Co salt solution. An about 80g/L $NH_4HCO_3$ solution, a cobalt nitrate solution and an about 40g/L lithium hydroxide solution were added in parallel by a peristaltic pump into a reaction vessel into which about 5L of deionized water was previously added to perform a co-precipitation reaction. The temperature of the reaction vessel was controlled to about 50°C, the feed rate of each solution was adjusted, the pH was controlled to about $8\pm0.5$, and continuous feeding was carried out for about 24 hours. Stirring was stopped and suction filtration was carried out, and a precipitate was washed with deionized water until the pH of filtrate was less than about 7, and the precipitate was dried at about 90°C to obtain a near-spherical precursor precipitate with $D_{50}$ being equal to about 4-5 $\mu$m. The precursor precipitate was subjected to high-speed ball milling with about 79.0g of lithium carbonate, about 0.159g of aluminum oxide and about 0.247g of magnesium oxide, and sintered in an air atmosphere at about 980°C for about 10 hours to form doped lithium cobalt oxide.

Synthesis of surface-doped lithium cobalt oxide: the above lithium cobalt oxide and a mixture of nano aluminum oxide and nano titanium dioxide were uniformly mixed in a high-speed mixer, sintered at about 920°C for about 8 hours while the mole ratios of Al and Ti to Co were controlled to be about 0.25% and about 0.25% respectively, naturally cooled to about 200°C, and then sintered in an oxygen-containing atmosphere at an annealing temperature of about 820°C for about 4 hours to obtain a high-rate stable cathode material B1.

The experiment proved that the high-rate stable cathode material involved in the present application can be obtained when the volume percent of oxygen in the oxygen-containing atmosphere was less than about 10%, the annealing temperature was about 700-860°C and the annealing time was about 2-6 hours.

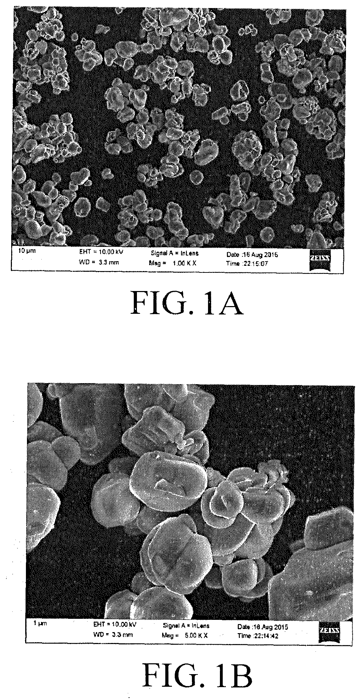

FIG. 1A and FIG. 1B are SEM images of B1 obtained at different magnification ratios. The laser particle size test shows that the median particle diameter $D_{50}$ of B1 is about 6 $\mu$m.

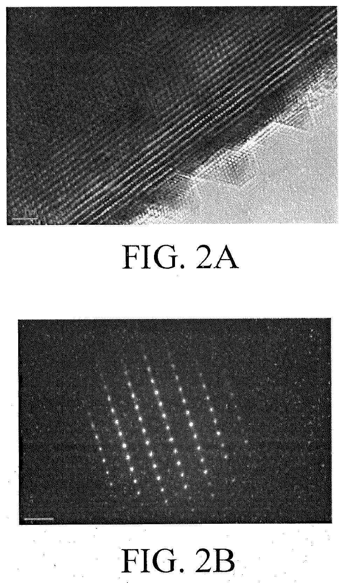

FIG. 2A and FIG. 2B are respectively a high-magnification TEM image and an electron diffraction diagram of the obtained B1. As can be seen from the high-magnification TEM image, the surface of B1 has a thin protruding structure. From diffraction spots in the electron diffraction diagram, it can be determined that the surface structure of B1 is a spinel phase structure.

In addition, the active specific surface area of B1 measured by the above active specific surface area test method is about 3.70 $cm^2$/g.

Then, in conjunction with the preparation process, the surface composition of the formed cathode material B1 is described as follows. Firstly, doped lithium cobalt oxide bulk-doped with Al and Mg elements were synthesized; when the surface of the bulk-doped lithium cobalt oxide was coated with an oxide of Al and Ti and subjected to high-temperature sintering and annealing, chemical bonds between Al and O and bonds between Ti and O would be broken, meanwhile Al and Ti would occupy the Co site, or were also possible to intercalate Co-Li or Co-Co and form new chemical bonds with Li, Co and O. In addition, since the amount of bulk-doping metal elements (for example, Al and Mg) was scarce, even if bulk-doping metal elements would be diffused into the surface in the subsequent high-temperature sintering and annealing process, the distribution of the bulk-doping metal elements in the surface could be considered negligible as compared to the contents of the surface-doping metal elements and Li, Co and O. That is, the surface of the cathode material B1 was mainly composed of surface-doping metals (A1 and Ti), and Li, Co and O.

In summary, the structure of the cathode material B1 could be described as: the structure includes a matrix and a coating layer coated on the matrix surface, wherein the matrix is lithium cobalt oxide bulk-doped with metal elements Al and Mg, the coating layer includes Al, Ti, O, Li and Co elements, and the coating layer is a spinel phase structure.

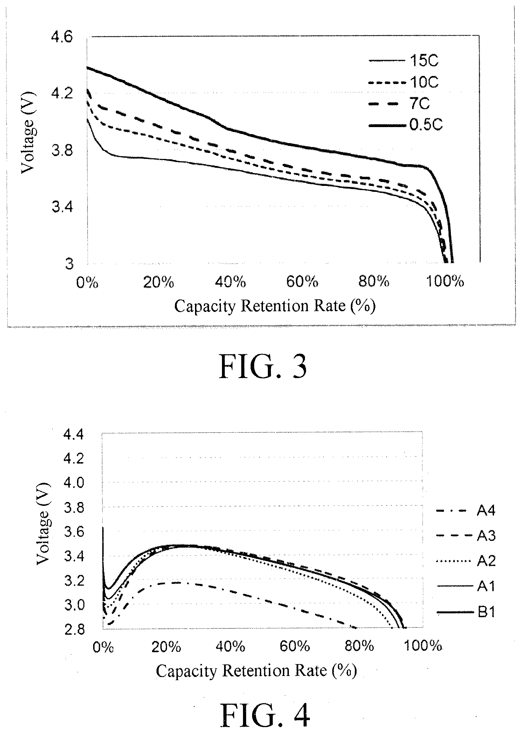

FIG. 3 shows discharge curves of the cathode material B1 at different currents. It can be seen from FIG. 3 that the lithium ion battery including the cathode material B1 can be discharged at a high voltage, and the lithium ion battery has excellent rate performance. When the current is increased from about 0.5 C to about 15 C, the capacity retention rate is up to about 98%.

Further, the present application provided four comparative embodiments to compare and explain the electrochemical performance of the cathode material B1.

**Comparative Embodiments 1-4:**

Comparative Embodiment 1 (comparative material A1): lithium cobalt oxide with $D_{50}$ being equal to 11$\mu$m and bulk-doped with Mg, Al and Ti is synthesized. A near-spherical precursor precipitate with $D_{50}$ being in a range of about 9-10 $\mu$m was synthesized by the steps identical to those of Embodiment 1 (B1). The precursor precipitate was subjected to high-speed ball milling with about 79.0g of lithium carbonate, about 0.159g of aluminum oxide, about 0.247g of magnesium oxide and about 0.200g of titanium oxide, and sintered in an air atmosphere at about 1040°C for about 10 hours.

Comparative Embodiment 2 (comparative material A2): lithium cobalt oxide with $D_{50}$ being equal to 6$\mu$m and bulk-doped with Mg, Al and Ti was synthesized. A near-spherical precursor precipitate with $D_{50}$ being in a range of about 4-5 $\mu$m was synthesized by the steps identical to those of Embodiment 1 (B1). The precursor precipitate was subjected to high-speed ball milling with about 79.0g of lithium carbonate, about 0.159g of aluminum oxide, about 0.247g of magnesium oxide and about 0.200g of titanium oxide, and sintered in an air atmosphere at about 980°C for about 10 hours.

Comparative Embodiment 3 (comparative material A3): Doped lithium cobalt oxide bulk-doped with Al and Mg was synthesized by the synthesis steps identical to those of the cathode material B1; annealing and sintering were directly carried out at about 820°C for about 4 hours without surface doping with Al and Ti elements.

Comparative Embodiment 4 (comparative material A4): Lithium cobalt oxide bulk-doped with Al and Mg and surface-doped with Al and Ti was synthesized by the synthesis steps identical to those of the cathode material B1; and sintering was carried out at about 920°C for about 8 hours without further annealing and sintering.

Embodiment 1 and Comparative Embodiments 1-4 were respectively subjected to a particle size and active specific surface area test and an electrochemical test. Test results are shown in FIG. 4 and Table 1:

Table 1

| Material Name | Median Particle Diameter $D_{50}(\mu m)$ | Active Specific Surface Area $(cm^2/g)$ | Discharge Specific Capacity at 0.5C (mAh/g) | Discharge Capacity Retention Rate at 15C (100% at 0.5C) | Discharge Valley Voltage at -10°C and at 8C (V) | Discharge Specific Capacity at -10°C and 0.5C (mAh/g) | Discharge Capacity Retention Rate at -10°C and 6C (100% at 0.5C) |
|---|---|---|---|---|---|---|---|
| B1 | 6 | 3.70 | 174.0 | 97.8% | 3.12 | 173.6 | 99.6% |
| A1 | 11 | 2.92 | 172.9 | 90.2% | 2.80 | 171.3 | 60.0% |
| A2 | 6 | 3.18 | 173.8 | 92.0% | 2.89 | 172.5 | 71.2% |
| A3 | 6 | 3.37 | 171.5 | 94.0% | 3.05 | 171.2 | 95.5% |
| A4 | 6 | 3.42 | 173.5 | 92.3% | 2.97 | 171.8 | 87.9% |

Table 1 (continued)

| Material Name | At 60°C, 30-Day Thickness Expansion Rate | At 45°C, Specific Capacity of First Cycle at 5C (mAh/g) | At 45°C, Capacity Retention Rate after 500 Cycles at 5C |
|---|---|---|---|
| B1 | 5.6% | 173.1 | 89.0% |
| A1 | 3.2% | 171.1 | 89.3% |
| A2 | 20.1% | 172.1 | 83.4% |
| A3 | 35.5% | 170.8 | 69.1% |
| A4 | 9.2% | 171.6 | 87.0% |

FIG. 4 shows discharge curves of the cathode material B1 and the comparative materials A1-A4 at about -10°C and at a current of about 8C. Referring to FIG. 4, compared with the comparative materials A1-A4, the cathode material B1 has the highest valley voltage, indicating that the cell prepared by the material has the lowest transient polarization during the low-temperature high-rate discharge, i.e., the cell has the lowest ohmic polarization and load transfer impedance and the highest interfacial reaction activity. This is because the superficial structure of the cathode material B1 has higher activity and the area participating in the interfacial reaction is larger than that of the comparative materials A1-A4.

The data in Table 1 show that the cathode material B1 has the largest active specific surface area compared to the comparative materials A1-A4 (for example, the active specific surface area respectively increases by about 27% and about 14% as compared to A1 and A2). Secondly, the cathode material B1 exhibits the best rate performance at normal temperature and low temperature, and especially in the low-temperature (-10°C) environment, the capacity retention rate of the cathode material B1 during the discharge at about 6C is up to about 99.6% as compared to the discharge at about 0.5C. In addition, for the cathode material B1, the improvement of the electrochemical performance in a low-temperature environment does not cause a large drop in the electrochemical performance in a high-temperature environment, so the cathode material B1 has excellent rate performance at low temperature while having a good electrochemical performance at high temperature.

The excellent electrochemical performance of the cathode material B1 is mainly attributed to:(1) The surface of the cathode material B1 forms a spinel phase structure, and the spinel phase structure has a three-dimensional deintercalated lithium channel, which is more favorable for the diffusion and migration of lithium ions than the common layered two-dimensional structure, thereby enhancing the rate performance of the material; (2) the combined actions of the spinel phase structure and metal doping improve the interfacial activity of the material and introduce more electrochemical active sites; and (3) the surface doping metals of the cathode material B1 also make the interface property more stable, thereby ensuring its electrochemical performance under high-temperature charge and discharge conditions.

B1 is a cathode material exemplified in an embodiment of the present application. The present application also provides Embodiments 2-35 by adjusting factors such as the number of surface-doping elements, element types, content, annealing temperature, annealing time and the like. The performance of obtained samples was subjected to corresponding electrochemical tests, which is described as follows.

(2) Embodiments 2-4 (changing the number of the types of surface-doping elements)

B2-B4 were synthesized by the same synthesis steps as B1. B2-B4 differed in the number of the types of the surface-doping elements. Specifically, the B2 surface was doped only with Al, the B3 surface was doped with Al and Zr, and the B4 surface was doped with Al, Zr and Mg. Table 2 lists the bulk and surface doping elements and contents of B2-B4.

Table 2

| Material Name | Bulk-Doping Element | Bulk-Doping Element Content (mole percent to Co) | Coating Oxide | Surface-Doping Element Content (mole percent to Co) |
|---|---|---|---|---|
| B2 | Mg, Al | 0.6%, 0.3% | $Al_2O_3$ | 0.6% |
| B3 | Mg, Al | 0.6%, 0.3% | $Al_2O_3$, $ZrO_2$ | 0.3%, 0.3% |
| B4 | Mg, Al | 0.6%, 0.3% | $Al_2O_3$, $ZrO_2$, MgO | 0.2%, 0.2%, 0.2% |

The cathode materials B2-B4 were tested for particle diameter, electrochemically active specific surface area and electrochemical performance by using the test methods listed in the present application. Specific results are shown in Table 3:

Table 3

| Material Name | Median Particle Diameter $D_{50}$ (μm) | Active Specific Surface Area (cm$^2$/g) | Discharge Specific Capacity at 0.5C (mAh/g) | Discharge Capacity Retention Rate at 15C (100% at 0.5C) | Discharge Valley Voltage at -10°C and at 8C (V) | Discharge Specific Capacity at -10°C and 0.5C (mAh/g) | Discharge Capacity Retention Rate at -10°C and 6C (100% at 0.5C) |
|---|---|---|---|---|---|---|---|
| B2 | 6 | 3.60 | 172.6 | 97.2% | 3.08 | 171.2 | 99.0% |
| B3 | 6 | 3.71 | 173.8 | 97.6% | 3.14 | 172.9 | 99.8% |
| B4 | 6 | 3.75 | 174.5 | 97.7% | 3.17 | 174.2 | 99.8% |

Table 3 (continued)

| Material Name | At 60°C, 30-Day Thickness Expansion Rate | At 45°C, Specific Capacity of First Cycle at 5C (mAh/g) | At 45°C, Capacity Retention Rate after 500 Cycles at 5C |
|---|---|---|---|
| B2 | 3.5% | 171.4 | 89.0% |
| B3 | 3.3% | 172.9 | 88.9% |
| B4 | 3.2% | 173.8 | 90.2% |

Based on the above test data, it can be known that doping two or more metal elements in the surface further improves the electrochemical performance of the cathode material as compared to the case where only one metal element was doped in the surface. This is because the atomic radius and valence of Al, Zr and Mg and the strength of the covalent bond between Al, Zr, Mg and O are different. The doping of various elements can form different electron cloud densities around the Co element, making its dynamic performance to be further improved; and in the high temperature and high lithium deintercalated state chemical environment, various elements can occupy the Co site at multiple levels, or adaptively intercalate Co-Li or Co-Co respectively, thereby strengthening the chemical connection with O, supporting the structure of lithium cobalt oxide and improving the interfacial energy of the cathode material.

(3) Embodiments 5-10 (changing the types of bulk-doping elements and surface-doping elements)

B5-B10 were synthesized by using the same synthesis steps as B1, wherein the types of bulk-doping and surface-doping elements were adjusted. See Table 4 for details:

Table 4

| Material Name | Bulk-Doping Element | Bulk-Doping Element Content (mole percent to Co) | Coating Oxide | Surface-Doping Element Content (mole percent to Co) |
|---|---|---|---|---|
| B5 | Mg, Ti | 0.6%, 0.3% | $Fe_2O_3$, $ZrO_2$ | 0.5%, 0.25% |
| B6 | Mg, Ti | 0.6%, 0.3% | $Al_2O_3$, NiO | 0.5%, 0.25% |
| B7 | Mg, Ti | 0.6%, 0.3% | MgO, $Al_2O_3$ | 0.5%, 0.25% |

(continued)

| Material Name | Bulk-Doping Element | Bulk-Doping Element Content (mole percent to Co) | Coating Oxide | Surface-Doping Element Content (mole percent to Co) |
|---|---|---|---|---|
| B8 | Ti, Al | 0.6%, 0.3% | MgO, $Al_2O_3$ | 0.5%, 0.25% |
| B9 | Ti, Al | 0.6%, 0.3% | $Al_2O_3$, MnO | 0.5%, 0.25% |
| B10 | Ti, Al | 0.6%, 0.3% | $Y_2O_3$, MgO | 0.5%, 0.25% |

The cathode materials B5-B10 were tested for particle diameter, electrochemically active specific surface area and electrochemical performance by using the test methods listed in the present application. Specific results are shown in Table 5:

Table 5

| Material Name | Median Particle Diameter $D_{50}$ (μm) | Active Specific Surface Area ($cm^2$/g) | Discharge Specific Capacity at 0.5C (mAh/g) | Discharge Capacity Retention Rate at 15C (100% at 0.5C) | Discharge Valley Voltage at -10°C and at 8C (V) | Discharge Specific Capacity at -10°C and 0.5C (mAh/g) | Discharge Capacity Retention Rate at -10°C and 6C (100% at 0.5C) |
|---|---|---|---|---|---|---|---|
| B5 | 6 | 3.82 | 172.4 | 98.1% | 3.22 | 171.2 | 99.6% |
| B6 | 6 | 3.93 | 173.6 | 98.8% | 3.26 | 172.9 | 99.5% |
| B7 | 6 | 3.82 | 174.8 | 98.9% | 3.26 | 173.9 | 99.8% |
| B8 | 6 | 3.92 | 173.9 | 99.8% | 3.28 | 173.2 | 99.8% |
| B9 | 6 | 4.05 | 172.6 | 99.8% | 3.28 | 171.2 | 99.9% |
| B10 | 6 | 3.78 | 174.0 | 99.7% | 3.27 | 173.0 | 99.8% |

Table 5 (continued)

| Material Name | At 60°C, 30-Day Thickness Expansion Rate | At 45°C, Specific Capacity of First Cycle at 5C (mAh/g) | At 45°C, Capacity Retention Rate after 500 Cycles at 5C |
|---|---|---|---|
| B5 | 8.9% | 171.0 | 86.5% |
| B6 | 9.5% | 172.9 | 85.0% |
| B7 | 3.8% | 173.8 | 90.5% |
| B8 | 4.2% | 172.2 | 89.5% |
| B9 | 5.9% | 171.0 | 88.7% |
| B10 | 6.9% | 172.6 | 83.0% |

Based on the test results in Table 5, the obtained cathode materials B5-B10 have an active specific surface area greater than about 3.7 cm$^2$/g, and have excellent electrochemical performance, and especially in a low-temperature environment, the capacity retention rate during discharge at about 6C is up to about 99.5% or above. At the same time, B5-B10 also have cycle stability under high-temperature high-rate charge and discharge conditions.

In addition to the above listed embodiments, the bulk-doping metal element may also be Zr. Zr and Ti are both located in the fourth subfamily of the periodic table of elements, and the structural stability of Zr$^{4+}$ and Ti$^{4+}$ is better than that of Co$^{4+}$. Therefore, compared with the Co-O bond, the bond energy of the Zr-O bond is stronger, thereby more easily stabilizing the structure of lithium cobalt oxide.

Besides, the surface-doping metal element may also be Ti, Zr, Mo, W, Na, Cu, Cr, Zn or Fe. On the one hand, the oxidation state of the above elements has higher structural stability; on the other hand, the above elements can be combined with elements such as Li, O, Co and the like to form a spinel phase structure.

Therefore, doping any one or more of the above bulk-doping metal elements in the bulk of the lithium cobalt oxide, and doping any one or more of the above surface-doping metal elements in the surface of lithium cobalt oxide can obtain the cathode material with excellent electrochemical performance. In addition, the bulk-doping element is not limited to the four elements of Mg, Ti, Zr or Al, and any element having similar properties to the above elements can realize the present application, and thus falls within the protection scope of the present application. Similarly, the surface-doping element is not limited to elements such as Ni, Mn, Al, Mg, Ti, Zr, Y, Mo, W, Na, Cu, Cr, Zn or Fe, and any element having similar properties to the above elements can realize the present application, and thus falls within the protection scope of the present application.

(4) Embodiments 11-17 (changing the contents of surface-doping elements)

B11-B17 were synthesized by using the same synthesis steps as B1, and B11-B17 differed in the surface element doping content. Specific results are shown in Table 6:

Table 6

| Material Name | Bulk-Doping Element | Bulk-Doping Element Content (mole percent to Co) | Coating Oxide | Surface-Doping Element Content (mole percent to Co) |
|---|---|---|---|---|
| B11 | Ti, Al | 0.6%, 0.3% | MgO, Al$_2$O$_3$ | 0.05%, 0.05% |
| B12 | Ti, Al | 0.6%, 0.3% | MgO, Al$_2$O$_3$ | 0.1%, 0.05% |
| B13 | Ti, Al | 0.6%, 0.3% | MgO, Al$_2$O$_3$ | 1%, 0.5% |
| B14 | Ti, Al | 0.6%, 0.3% | MgO, Al$_2$O$_3$ | 1.5%, 0.75% |
| B15 | Ti, Al | 0.6%, 0.3% | MgO, Al$_2$O$_3$ | 2%, 1% |
| B16 | Ti, Al | 0.6%, 0.3% | MgO, Al$_2$O$_3$ | 2%, 3% |
| B17 | Ti, Al | 0.6%, 0.3% | MgO, Al$_2$O$_3$ | 3%, 1% |

The cathode materials B11-B17 were tested for particle diameter, electrochemically active specific surface area and electrochemical performance by using the test methods listed in the present application. Specific results are shown in Table 7:

Table 7

| Material Name | Median Particle Diameter $D_{50}$ (μm) | Active Specific Surface Area (cm²/g) | Discharge Specific Capacity at 0.5C (mAh/g) | Discharge Capacity Retention Rate at 15C (100% at 0.5C) | Discharge Valley Voltage at -10°C and at 8C (V) | Discharge Specific Capacity at -10°C and 0.5C (mAh/g) | Discharge Capacity Retention Rate at -10°C and 6C (100% at 0.5C) |
|---|---|---|---|---|---|---|---|
| B11 | 6 | 3.61 | 172.5 | 96.8% | 3.09 | 171.1 | 99.6% |
| B12 | 6 | 3.63 | 173.0 | 97.1% | 3.10 | 171.8 | 99.5% |
| B13 | 6 | 3.86 | 174.2 | 98.7% | 3.12 | 173.5 | 99.5% |
| B14 | 6 | 3.88 | 174.5 | 98.2% | 3.08 | 173.3 | 99.2% |
| B15 | 6 | 3.89 | 172.0 | 97.1% | 3.04 | 171.0 | 99.0% |
| B16 | 6 | 3.65 | 170.8 | 96.5% | 3.03 | 169.1 | 98.5% |
| B17 | 6 | 3.62 | 169.5 | 96.3% | 3.01 | 167.6 | 98.0% |

Table 7 (continued)

| Material Name | At 60°C, 30-Day Thickness Expansion Rate | At 45°C, Specific Capacity of First Cycle at 5C (mAh/g) | At 45°C, Capacity Retention Rate after 500 Cycles at 5C |
|---|---|---|---|
| B11 | 8.9% | 171.3 | 87.0% |
| B12 | 3.4% | 172.0 | 89.5% |
| B13 | 2.0% | 173.3 | 90.8% |
| B14 | 1.0% | 173.6 | 92.3% |
| B15 | 0.6% | 170.6 | 93.3% |
| B16 | 0.6% | 168.9 | 92.1% |
| B17 | 0.3% | 167.8 | 91.0% |

In Embodiments 11-17, two metal elements were doped in the bulk and the surface of lithium cobalt oxide, and the content of the surface-doping element was adjusted. Based on the data shown in Table 7, the cathode materials B11-B17 have an active specific surface area greater than about 3.6 cm²/g, exhibit excellent rate performance during normal-temperature and low-temperature charge and discharge, and exhibit good cycle stability in a high-temperature charge and discharge environment.

However, by comparing the above data, it can be known that when the content of the surface-doping metal element is too high or too low, the electrochemical performance of the cathode material is affected. For example, for B11, when the content of the surface-doping elements is about 0.05%, its performance at high temperature is slightly worse than that of B12-B17. This is because the doping content of the metal element is too low to make up for the poor Co-O chemical bond strength or to improve the interface performance of the cathode material. In addition, for B16-B17, when the content of the surface-doping metals is too high, it will affect the capacity of the cathode material. This is because the metal element doping content being too high will reduce the effective Co content and affect the deintercalation reaction of $Li^+$.

(5) Embodiments 18-24 (changing the contents of bulk-doping elements)

B18-B24 were synthesized by using the same synthesis steps as B1, and B18-B24 differed in the bulk element doping content. Specific results are shown in Table 8:

Table 8

| Material Name | Bulk-Doping Element | Bulk-Doping Element Content (mole percent to Co) | Coating Oxide | Surface-Doping Element Content (mole percent to Co) |
|---|---|---|---|---|
| B18 | Ti, Al | 0.1%, 0.6% | MgO, $Al_2O_3$ | 0.5%, 0.25% |
| B19 | Ti, Al | 0.3%, 0.6% | MgO, $Al_2O_3$ | 0.5%, 0.25% |
| B20 | Ti, Al | 0.3%, 0.3% | MgO, $Al_2O_3$ | 0.5%, 0.25% |
| B21 | Ti, Al | 0.6%, 0.6% | MgO, $Al_2O_3$ | 0.5%, 0.25% |
| B22 | Ti, Al | 0.6%, 0.9% | MgO, $Al_2O_3$ | 0.5%, 0.25% |
| B23 | Mg, Al | 0.6%, 0.9% | $TiO_2$, $Al_2O_3$ | 0.25%, 0.25% |
| B24 | Mg, Al | 0.6%, 0.6% | $TiO_2$, $Al_2O_3$ | 0.25%, 0.25% |

The cathode materials B18-B24 were tested for particle diameter, electrochemically active specific surface area and electrochemical performance by using the test methods listed in the present application. Specific results are shown in Table 9:

Table 9

| Material Name | Median Particle Diameter $D_{50}(\mu m)$ | Active Specific Surface Area $(cm^2/g)$ | Discharge Specific Capacity at 0.5C (mAh/g) | Discharge Capacity Retention Rate at 15C (100% at 0.5C) | Discharge Valley Voltage at -10°C and at 8C (V) | Discharge Specific Capacity at -10°C and 0.5C (mAh/g) | Discharge Capacity Retention Rate at -10°C and 6C (100% at 0.5C) |
|---|---|---|---|---|---|---|---|
| B18 | 6 | 3.76 | 172.9 | 98.3% | 3.21 | 172.0 | 99.5% |
| B19 | 6 | 3.79 | 173.6 | 99.4% | 3.33 | 172.4 | 99.7% |
| B20 | 6 | 3.82 | 174.9 | 97.6% | 3.19 | 173.5 | 99.4% |
| B21 | 6 | 3.83 | 174.2 | 99.5% | 3.13 | 172.8 | 99.2% |
| B22 | 6 | 3.82 | 172.0 | 99.0% | 3.20 | 170.5 | 99.5% |
| B23 | 6 | 3.76 | 171.2 | 99.3% | 3.23 | 169.8 | 99.9% |
| B24 | 6 | 3.73 | 172.8 | 98.1% | 3.18 | 171.6 | 99.7% |

Table 9 (continued)

| Material Name | At 60°C, 30-Day Thickness Expansion Rate | At 45°C, Specific Capacity of First Cycle at 5C (mAh/g) | At 45°C, Capacity Retention Rate after 500 Cycles at 5C |
|---|---|---|---|
| B18 | 2.9% | 171.9 | 80.9% |
| B19 | 3.8% | 172.4 | 87.9% |
| B20 | 5.1% | 173.7 | 86.3% |
| B21 | 4.0% | 172.8 | 91.5% |
| B22 | 2.0% | 170.5 | 93.8% |
| B23 | 1.0% | 169.7 | 93.2% |
| B24 | 3.4% | 171.4 | 91.6% |

Based on the test results in Table 9, the obtained cathode materials B18-B24 have an active specific surface area greater than about 3.7 cm²/g, and respectively have excellent electrochemical performance, and especially in a low-temperature environment, the capacity retention rate during discharge at about 6C is up to about 99% or above. At the same time, B18-B24 also have excellent electrochemical performance at high temperature, and especially excellent cycle stability under high-temperature high-rate charge and discharge conditions.

(6) Embodiments 25-28 (changing the annealing temperature)

B25-B28 were synthesized by using the same synthesis steps and the same materials as B1, with the exception that the annealing temperature was adjusted in the case of B25-B28. Measured electrochemical data is shown in Table 10:

Table 10

| Material Name | Annealing Temperature | Median Particle Diameter $D_{50}(\mu m)$ | Active Specific Surface Area $(cm^2/g)$ | Discharge Specific Capacity at 0.5C (mAh/g) | Discharge Capacity Retention Rate at 15C (100% at 0.5C) |
|---|---|---|---|---|---|
| B25 | 860°C | 6 | 3.63 | 174.5 | 97.1% |
| B1 | 820°C | 6 | 3.70 | 174.0 | 97.8% |
| B26 | 780°C | 6 | 3.83 | 173.8 | 98.5% |

| B27 | 740°C | 6 | 4.00 | 173.6 | 98.6% |
| B28 | 700°C | 6 | 4.06 | 173.7 | 98.8% |

Table 10 (continued)

| Material Name | Discharge Valley Voltage at -10°C and at 8C (V) | Discharge Specific Capacity at -10°C and 0.5C (mAh/g) | Discharge Capacity Retention Rate at -10°C and 6C (100% at 0.5C) | At 60°C, 30-Day Thickness Expansion Rate | At 45°C, Specific Capacity of First Cycle at 5C (mAh/g) | At 45°C, Capacity Retention Rate after 500 Cycles at 5C |
|---|---|---|---|---|---|---|
| B25 | 3.10 | 173.3 | 99.5% | 3.4% | 173.1 | 89.5% |
| B1 | 3.12 | 173.6 | 99.6% | 5.6% | 173.1 | 89.0% |
| B26 | 3.18 | 172.9 | 99.8% | 5.8% | 172.6 | 86.0% |
| B27 | 3.20 | 172.7 | 99.8% | 6.3% | 172.7 | 86.1% |
| B28 | 3.25 | 173.0 | 99.9% | 6.7% | 172.8 | 85.0% |

Comparing the above data, the lower the annealing temperature is, the higher the active specific surface area is, and the better the rate performance at normal temperature and low temperature is, though the corresponding high-temperature cycle retention rate will be slightly lost. However, compared to the unannealed A4, the rate performance of B1 and B25-B28 in both normal-temperature and low-temperature discharge environments is improved. This is because the annealing treatment promotes the formation of the spinel phase structure and enhances the stability of the material surface.

(7) Embodiments 29-30 (changing the annealing time)

B29-B30 were synthesized by using the same synthesis steps and the same materials as B8, with the exception that the annealing time was adjusted in the case of the former. Measured electrochemical data is shown in Table 11:

Table 11

| Material Name | Annealing Time (h) | Median Particle Diameter $D_{50}(\mu m)$ | Active Specific Surface Area $(cm^2/g)$ | Discharge Specific Capacity at 0.5C | Discharge Capacity Retention Rate at 15C (100% at 0.5C) |
|---|---|---|---|---|---|

| | | | | (mAh/g) | |
|---|---|---|---|---|---|
| B30 | 2 | 6 | 3.84 | 173.6 | 98.7% |
| B8 | 4 | 6 | 3.92 | 173.9 | 99.8% |
| B31 | 6 | 6 | 3.95 | 174.2 | 99.9% |

## Table 11 (continued)

| Material Name | Discharge Valley Voltage at -10°C and at 8C (V) | Discharge Specific Capacity at -10°C and 0.5C (mAh/g) | Discharge Capacity Retention Rate at -10°C and 6C (100% at 0.5C) | At 60°C, 30-Day Thickness Expansion Rate | At 45°C, Specific Capacity of First Cycle at 5C (mAh/g) | At 45°C, Capacity Retention Rate after 500 Cycles at 5C |
|---|---|---|---|---|---|---|
| B30 | 3.10 | 172.9 | 98.9% | 4.9% | 172.7 | 85.1% |
| B8 | 3.28 | 173.2 | 99.8% | 4.2% | 172.2 | 89.5% |
| B31 | 3.32 | 173.0 | 99.9% | 0.5% | 172.8 | 91.5% |

Based on the above, the longer the sintering time is, the better the obtained electrochemical performance is. However, when the sintering time is about 6 hours, the electrochemical performance is already excellent, so that the extension of the sintering time cannot greatly improve the electrochemical performance. In terms of energy consumption, the annealing time can be set at about 2-6 hours.

(8) Embodiments 31 and 32 (doping metal elements into the precursor of LiCoO$_2$ when performing bulk doping)

Unlike the synthesis steps of Embodiment 1, Embodiments 31 and 32 were obtained by bulk-doping metal elements in a precursor of lithium cobalt oxide. The synthesis steps of Embodiment 31 are as follows:
Synthesis of bulk-doped lithium cobalt oxide: about 286.7g of Co(NO$_3$)$_2$·6H$_2$O, about 1.15g of Al(NO$_3$)$_3$·9H$_2$O and about 0.88g of Mg(CH$_3$COO)$_2$ were respectively weighed and dissolved in about 1L of deionized water, and stirred sufficiently at normal temperature to obtain corresponding solutions. An about 80g/L NH$_4$HCO$_3$ solution, a cobalt nitrate solution, an aluminum nitrate solution, a magnesium acetate solution and an about 40g/L lithium hydroxide solution were added in parallel by a peristaltic pump into a reaction vessel into which about 5L of deionized water was previously added to perform a co-precipitation reaction. The temperature of the reaction vessel was controlled to about 50°C, the feed rate of each solution was adjusted, the pH was controlled to about 8±0.5, and continuous feeding is carried out for about 24 hours. Stirring was stopped and suction filtration was carried out, and a precipitate was washed with deionized water until the pH of filtrate was less than about 7, and the precipitate was dried at about 90°C to obtain a near-spherical Mg and Al-doped precursor precipitate. The above doped precursor precipitate and lithium carbonate were uniformly mixed by ball milling, and sintered in an air atmosphere at about 980°C for about 10 hours to form doped lithium cobalt oxide.
Synthesis of surface-doped lithium cobalt oxide: the above lithium cobalt oxide and a mixture of nano aluminum oxide and nano titanium dioxide were uniformly mixed in a high-speed mixer while the mole percents of Al and Ti to Co were controlled to be about 0.25% and about 0.25% respectively, sintered at about 920°C for about 8 hours, naturally cooled to about 200°C, and after introducing about 3% of oxygen, sintered at about 820°C for about 4 hours to obtain a high-rate stable cathode material B31.
Embodiment 32: the synthesis steps were the same as those of Embodiment 31, only except that the mass of Al(NO$_3$)$_3$·9H$_2$O was set to about 3.45g, thereby obtaining a cathode material B32.
Test results of B31 and B32 are shown in Table 12.

Table 12

| Material Name | Median Particle Diameter $D_{50}(\mu m)$ | Active Specific Surface Area($cm^2$/g) | Discharge Specific Capacity at 0.5C (mAh/g) | Discharge Capacity Retention Rate at 15C (100% at 0.5C) |
|---|---|---|---|---|
| B31 | 6 | 3.68 | 174.6 | 98.9% |
| B32 | 6 | 3.67 | 173.3 | 98.2% |

Table 12 (continued)

| Material Name | Discharge Valley Voltage at -10°C and at 8C (V) | Discharge Specific Capacity at -10°C and 0.5C (mAh/g) | Discharge Capacity Retention Rate at -10°C and 6C (100% at 0.5C) | At 60°C, 30-Day Thickness Expansion Rate | At 45°C, Specific Capacity of First Cycle at 5C (mAh/g) | At 45°C, Capacity Retention Rate after 500 Cycles at 5C |
|---|---|---|---|---|---|---|
| B31 | 3.25 | 174.3 | 99.8% | 2.2% | 173.9 | 92.0% |
| B32 | 3.28 | 173.0 | 99.9% | 1.9% | 172.1 | 95.0% |

Compared with Embodiment B1, B31 has slightly better electrochemical performance because the bulk-doping metal elements enable a more uniform distribution of the metal elements in the bulk during the formation of the precursor of lithium cobalt oxide.

(9) Embodiments 33-35 (changing the particle diameter)

The following synthetic steps were used to synthesize doped lithium cobalt oxide B33-B35 having different median particle diameters:
Synthesis of bulk-doped lithium cobalt oxide: about 286.7g of $Co(NO_3)_2 \cdot 6H_2O$ was weighed and dissolved in about 1L of deionized water, and stirred sufficiently at normal temperature to obtain a Co salt solution. An about 80g/L $NH_4HCO_3$ solution, a cobalt nitrate solution and an about 40g/L lithium hydroxide solution were added in parallel by a peristaltic pump into a reaction vessel into which about 5L of deionized water was previously added to perform a co-precipitation reaction. The temperature of the reaction vessel was controlled to about 50°C, the pH was controlled to about 8±0.5, the feed rate of each solution was adjusted, and the continuous feeding was carried out while the particle diameter of the material was monitored until the target $D_{50}$ was equal to about 3μm, about 7μm and about 9μm. Stirring was stopped and suction filtration was carried out, and a precipitate was washed with deionized water until the pH of filtrate was less than about 7, and the precipitate was dried at about 90°C. The precursor precipitate having different particle diameters was subjected to high-speed ball milling with about 79.0g of lithium carbonate, about 0.159g of aluminum oxide and about 0.247g of magnesium oxide, and sintered in an air atmosphere at about 980°C for about 10 hours to form doped lithium cobalt oxide.
Synthesis of surface-doped lithium cobalt oxide: the above lithium cobalt oxide and a mixture of nano aluminum oxide and nano titanium dioxide were uniformly mixed in a high-speed mixer while the mole percentages of Al and Ti to Co were controlled to be about 0.25% and about 0.25% respectively, sintered at about 920°C for about 8 hours, naturally cooled to about 200°C, and after introducing about 3% of oxygen, annealed and sintered at about 820°C respectively for about 2 hours, about 6 hours and about 8 hours to obtain high-rate stable cathode materials B33-B35 of which $D_{50}$ was respectively about 4.1, about 7.3 and about 9.8μm.
Test results of B33-B35 are shown in Table 13.

Table 13

| Material Name | Median Particle Diameter $D_{50}(\mu m)$ | Active Specific Surface Area $(cm^2/g)$ | Discharge Specific Capacity at 0.5C (mAh/g) | Discharge Capacity Retention Rate at 15C (100% at 0.5C) |
|---|---|---|---|---|
| B33 | 4.1 | 3.89 | 174.8 | 98.6% |
| B34 | 7.3 | 3.65 | 174.3 | 97.2% |
| B35 | 9.8 | 3.62 | 173.6 | 97.0% |

Table 13 (continued)

| Material Name | Discharge Valley Voltage at -10°C and at 8C (V) | Discharge Specific Capacity at -10°C and 0.5C (mAh/g) | Discharge Capacity Retention Rate at -10°C and 6C (100% at 0.5C) | At 60°C, 30-Day Thickness Expansion Rate | At 45°C, Specific Capacity of First Cycle at 5C (mAh/g) | At 45°C, Capacity Retention Rate after 500 Cycles at 5C |
|---|---|---|---|---|---|---|
| B33 | 3.24 | 174.5 | 99.8% | 7.8% | 173.2 | 86.1% |
| B34 | 3.11 | 173.4 | 99.2% | 2.0% | 172.0 | 90.6% |
| B35 | 3.08 | 172.4 | 99.0% | 0.8% | 170.8 | 92.3% |

In summary, as the median diameter $D_{50}$ decreases, the active specific surface area of the obtained cathode material gradually increases, and the electrochemical performance at normal temperature and low temperature improves. However, too small particle diameter will be detrimental to industrial production. In order to obtain excellent rate performance and utilize industrial production, the median particle diameter of the lithium cobalt oxide cathode material can be set in the range of about 3-11 μm.

In the embodiments of the present application, the lithium source was lithium carbonate and the cobalt source was cobalt nitrate. However, persons skilled in the art understand that the lithium source and the cobalt source are for providing lithium ions and cobalt ions, such that lithium ions and cobalt ions are sufficiently contacted and reacted in an aqueous solution. Therefore, the technical solution of the present application can be achieved by using a compound capable of providing lithium ions or cobalt ions. For example, the lithium source may also be lithium acetate, lithium nitrate, lithium hydroxide or the like; and the cobalt source may be cobalt oxalate, cobalt acetate, cobalt carbonate, cobalt sulfate, cobalt chloride or the like.

Secondly, in the embodiments of the present application, lithium hydroxide was also used as a precipitant. Those skilled in the art understand that the function of the precipitant is to adjust the pH value of the solution, to promote the reaction of the lithium source and the cobalt source and to form a precipitate. In addition to the lithium hydroxide, the precipitant may also be: sodium hydroxide, ammonia or the like.

In addition, for bulk-doping and surface-doping metal elements, those skilled in the art can select metal oxides, metal salts or other types of compounds containing metal elements according to experimental conditions after reading the specification of the present application. For example, for Mg, magnesium oxide and magnesium acetate are selected in the present application according to different reaction conditions. In addition, the technical solution of the present application can also be achieved by selecting magnesium oxalate or magnesium nitrate.

As used herein, the term "about" is used to describe and explain minor changes. When used in conjunction with an event or situation, the term may refer to examples where the event or situation occurs exactly and examples where the event or situation occurs very closely. For example, when used in conjunction with a numerical value, the term may refer to a variation range that is less than or equal to ±10% of the numerical value, such as less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%. For example, if the difference between two numerical values is less than or equal to ±10% of the average of the values (e.g., less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%), the two values may be considered "about" the same.

In addition, amounts, ratios, and other numerical values are sometimes presented herein in a range format. It should be understood that such range formats are for convenience and brevity, should be interpreted with flexibility. The range format not only includes those numerical values that are specifically designated as range limitations, but also includes all individual numerical values or sub-ranges that are within the range, as each value and sub-range is specified explicitly.

The above description summarizes the features of several embodiments, which will enable those of ordinary skill in the art to better understand the various aspects of the present application. Those of ordinary skill in the art can readily use this application as a basis for designing or modifying other compositions to achieve the same objectives and/or the same advantages as the embodiments herein. It is also to be understood by those of ordinary skill in the art that these equal examples do not depart from the spirit and scope of the application, and it is possible to make various changes, substitutions and modifications to the present application without departing from the spirit and scope of the application. Although the methods disclosed herein have been described with reference to the specific operations that are carried out in a specific order, it is understood that these operations can be combined, subdivided, or reordered to form an equivalent method without departing from the teachings of the present application. Therefore, the order of operations and groups are not intended to limit the present application unless specifically indicated herein.

## Claims

1. A cathode material, comprising:

    a matrix, wherein the matrix comprises lithium cobalt bulk-doped with metal element M; and
    a coating layer, arranged on a surface of the matrix,
    wherein M comprises at least one of Mg, Ti, Zr or Al,
    wherein the coating layer has a spinel phase structure doped with metal element Me, and Me comprises at least one of Ni, Mn, Al, Mg, Ti, Zr, Y, Mo, W, Na, Cu, Cr, Zn or Fe, and
    wherein the coating layer comprises Me, O, Li and Co elements.

2. The cathode material according to claim 1, wherein an active specific surface area that the cathode material can perform a lithium ion deintercalation reaction is greater than or equal to $3.6 cm^2/g$.

3. The cathode material according to claim 1 or 2, wherein Me at least comprises two metal elements.

4. The cathode material according to any of claims 1-3, wherein M and Me are not completely identical.

5. The cathode material according to any of claims 1-4, wherein the mole percentage of each of Me relative to that of Co is 0.1%-2%.

6. The cathode material according to any of claims 1-5, wherein the mole percent of each of M relative to that of Co is 0.1%-1%.

7. The cathode material according to any of claims 1-6, wherein the cathode material has a median particle diameter $D_{50}$ 3-11$\mu$m.

8. A method for preparing a cathode material, comprising:

    providing a precursor of lithium cobalt oxide;
    mixing the precursor with a compound of lithium and a compound of metal element M, and sintering the mixture in an air atmosphere at 900-1000°C for 6-12 hours to form lithium cobalt oxide bulk-doped with metal element M; and
    mixing the lithium cobalt oxide with a compound of metal element Me, sintering the mixture in an air atmosphere at 850-950°C for 6-12 hours, naturally cooling, and then annealing the mixture in an oxygen-containing atmosphere to obtain a lithium cobalt oxide cathode material surface-doped with metal element Me and having a spinel phase structure on the surface, wherein the annealing temperature is 600-900°C, and the annealing time is 1-8 hours,
    wherein M comprises at least one of Mg, Ti, Zr or Al, and
    wherein Me comprises at least one of Ni, Mn, Al, Mg, Ti, Zr, Y, Mo, W, Na, Cu, Cr, Zn or Fe.

9.  The method according to claim 8, wherein the volume percentage of oxygen in the oxygen-containing atmosphere is less than 10%.

10. The method according to claim 8 or 9, wherein the annealing temperature is 700-860°C.

11. The method according to any of claims 8-10, wherein the annealing time is 2-6 hours.

12. A method for preparing a cathode material, comprising:

mixing a cobalt source, a lithium source, a precipitant and a salt of metal element M in an aqueous solution, and precipitating to form a precursor of lithium cobalt oxide bulk-doped with metal element M;
sintering the precursor in an air atmosphere at 900-1000°C for 6-12 hours to form lithium cobalt oxide bulk-doped with metal element M; and
mixing the lithium cobalt oxide with a compound of metal element Me, sintering the mixture in an air atmosphere at 850-950°C for 6-12 hours, naturally cooling the mixture, and then annealing the mixture in an oxygen-containing atmosphere to obtain a lithium cobalt oxide cathode material surface-doped with metal element Me and having a spinel phase structure on the surface, wherein the annealing temperature is 600-900°C, and the annealing time is 1-8 hours;
wherein M comprises at least one of Mg, Ti, Zr or Al, and
wherein Me comprises at least one of Ni, Mn, Al, Mg, Ti, Zr, Y, Mo, W, Na, Cu, Cr, Zn or Fe.

13. The method according to claim 12, wherein the volume percentage of oxygen in the oxygen-containing atmosphere is less than 10%.

14. The method according to claim 12 or 13, wherein the annealing temperature is 700-860°C.

15. The method according to any of claims 12-14, wherein the annealing time is 2-6 hours.

FIG. 1A

FIG. 1B

FIG. 2A

FIG. 2B

FIG. 3

FIG. 4

## REFERENCES CITED IN THE DESCRIPTION

### Patent documents cited in the description

- CN 201810478460